# EUROPÄISCHE PATENTSCHRIFT

(11) **EP 3 371 669 B1**
(45) Veröffentlichungstag und Bekanntmachung des Hinweises auf die Patenterteilung: **16.06.2021**
(21) Anmeldenummer: 16781410.2
(22) Anmeldetag: 12.10.2016
(51) Int. Cl.: G05D 1/02, G08G 1/16

(54) **VERFAHREN UND VORRICHTUNG ZUM DEZENTRALEN ABSTIMMEN VON FAHRMANÖVERN**
METHOD AND DEVICE FOR THE DECENTRALIZED COORDINATION OF DRIVING MANOEUVRES
PROCÉDÉ ET DISPOSITIF DE COORDINATION DÉCENTRALISÉE DE MANOEUVRES DE CONDUITE

(30) Priorität: 06.11.2015 DE 102015221817
(43) Veröffentlichungstag der Anmeldung: 12.09.2018
(73) Patentinhaber: Volkswagen Aktiengesellschaft, 38440 Wolfsburg (DE); Audi AG, 85045 Ingolstadt (DE)
(72) Erfinder: LEHMANN, Bernd, 38444 Wolfsburg (DE); KLEINAU, Sandra, 38531 Rötgesbüttel (DE); MEIER, Jan-Niklas, 38440 Wolfsburg (DE); RECH, Bernd, 38556 Bokensdorf (DE); BUBURUZAN, Teodor, 38118 Braunschweig (DE); GLÄSER, Stefan, 38104 Braunschweig (DE); GÜNTHER, Hendrik-Jörn, 30173 Hannover (DE); ENGEL, Monique, 38110 Braunschweig (DE); PASCHEKA, Patrick, 2582 EN Den Haag (NL)
(74) Vertreter: Zucker, Volker
(86) Internationale Anmeldenummer: PCT/EP2016/074463
(87) Internationale Veröffentlichungsnummer: WO 2017/076593

(56) Entgegenhaltungen:
- DE-A1-102012 011 994
- DE-A1-102012 021 282
- DE-A1-102013 223 428

## Beschreibung

Die Erfindung betrifft ein Verfahren und eine Vorrichtung zum dezentralen Abstimmen von Fahrmanövern.

Moderne Kraftfahrzeuge weisen eine Vielzahl von Assistenzsystemen auf, welche den Fahrer beim Führen des Fahrzeugs unterstützen. Vermehrt kommen dabei semi-autonome und autonome Systeme zum Einsatz, die eine semi- oder vollautomatische Steuerung des Kraftfahrzeugs erlauben. Beim vollautomatisierten Fahren ist dabei eine Abstimmung zwischen dem Kraftfahrzeug mit anderen Kraftfahrzeugen im Umfeld notwendig.

Aus der DE 10 2012 011 994 A1 ist ein Verfahren zum kooperativen Steuern einer Verkehrssituation mit mindestens zwei Fahrzeugen bekannt, die mittels einer Vehicle2Vehicle-Kommunikation Informationen zwischen mindestens zwei Fahrzeugen austauschen, wobei die ausgetauschten Informationen zur Beeinflussung des Fahrverhaltens der beteiligten Fahrzeuge dienen. Dabei wird als auszutauschende Information zusätzlich zum aktuellen Fahrverhalten und aktuellen Fahrinformationen ein von einem ersten Fahrzeug beabsichtigtes Fahrverhalten an ein zweites Fahrzeug der mindesten zwei Fahrzeuge übertragen. Aufgrund der Information über das beabsichtigte Fahrverhalten passt das zweite Fahrzeug sein Fahrverhalten an das beabsichtigte Fahrverhalten des ersten Fahrzeugs an.

Der Nachteil des vorgenannten Verfahrens ist, dass auf Grundlage der ausgetauschten Information nur geprüft wird, ob eine Anpassung des Fahrverhaltens eines Fahrzeugs möglich ist oder nicht. Andere Faktoren, welche ein abgestimmtes automatisiertes Fahren über kooperatives Handeln fördern könnten, bleiben unberücksichtigt.

Aus der DE 10 2012 021 282 A1 ist ein Verfahren zur Koordination des Betriebs von vollautomatisiert fahrenden Kraftfahrzeugen bekannt, bestehend aus den Schritten:
- Ermittlung einer durch mindestens einen Fahreingriff beschriebenen Trajektorie für jedes Kraftfahrzeug aus Egoinformationen, die den Zustand des Kraftfahrzeugs einschließlich einer Zielposition beschreiben, und Umgebungsinformationen, die die Umgebung des Kraftfahrzeugs beschreiben, durch ein Fahrzeugsystem des Kraftfahrzeugs,
- Ermitteln, ob mindestens eine notwendige Koordination anzeigende Koordinationsbedingung oder mindestens eine der Koordinationsbedingungen vorliegt, Ausführen der folgenden Schritte:
- Austausch von Trajektoriendaten, die die Trajektorie beschreiben, über eine Kommunikationsverbindung durch eine fahrzeugeigene Kommunikationseinrichtung jedes Kraftfahrzeugs,
- Prüfung der Trajektoriendaten der Kraftfahrzeuge auf Konflikte, die aufgrund einer räumlichen und zeitlichen Überlappung der Trajektorie von mindestens zwei der Kraftfahrzeuge und/oder Nichterreichen der Zielposition mindestens eines der Kraftfahrzeuge vorliegen,
- Falls ein Konflikt vorliegt: Anpassung der Trajektorie mindestens eines an dem Konflikt beteiligten Kraftfahrzeugs aufgrund wenigstens einer Arbitrierungsregel, die durch eine Arbitrierungseinrichtung ausgewertet wird, und
- Ausführen der von der jeweiligen Trajektorie beschriebenen Fahreingriffe durch jedes Kraftfahrzeug.

Der Erfindung liegt das technische Problem zugrunde, ein Verfahren und eine Vorrichtung in einem Kraftfahrzeug zum dezentralen Abstimmen von Fahrmanövern zu schaffen, bei denen eine Abstimmung zwischen den Kraftfahrzeugen verbessert ist.

Die technische Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Eine Trajektorie soll im Folgenden eine mögliche Fahrstrecke bezeichnen. Die Trajektorie beschreibt mathematisch eine geographische Strecke. Jedem beliebigen geographischen Punkt auf dieser Strecke kann eine Zeit zugeordnet werden, welche angibt, wann das Kraftfahrzeug diesen Punkt passieren kann. Wenn eine solche Trajektorie das geplante Manöver eines Fahrzeug darstellt, dann erlaubt es zu prädizieren, an welcher Position sich dieses Fahrzeug zu einem Bestimmten Zeitpunkt befinden wird.

Eine Plantrajektorie soll im Folgenden eine Trajektorie bezeichnen, welche fahrspurgenau ist und das aktuell geplante Fahrmanöver beschreibt.

Eine Wunschtrajektorie ist eine Trajektorie, die gegenüber der Plantrajektorie bevorzugt wird, beispielsweise weil sie kostensparender oder zu einer kürzeren Fahrzeit führen würde. Allerdings kann die Wunschtrajektorie aus unterschiedlichen Gründen nicht abgefahren werden, weil z.B. die Trajektorie zu einer Kollision mit anderen Fahrzeugen führen würde. Grundsätzlich muss eine Wunschtrajektorie fahrdynamisch abfahrbar sein.

Eine strategische Trajektorie soll im Folgenden eine Trajektorie sein, die nicht fahrspurgenau sein muss, sondern lediglich die Straßen, die von einem Kraftfahrzeug in naher Zukunft befahren werden sollen, umfasst. Die strategische Trajektorie zeigt an, welches strategische Ziel ein Kraftfahrzeug verfolgt. Mit strategischen Zielen wird hier z.B. gemeint, an welcher Kreuzung ein Kraftfahrzeug rechts oder links abbiegen möchte. Sie umfasst dabei nicht die komplette Wegstrecke von einem Startpunkt bis zu einem Zielpunkt. Es reicht wenn anhand dieser Trajektorie das nächste Teilziel (Abbiegen, Parken/Anhalten, ...) erkennbar ist.

Es wird ein Verfahren zum dezentralen Abstimmen von Fahrmanövern von mindestens zwei Kraftfahrzeugen zur Verfügung gestellt, umfassend die folgenden Schritte: Bereitstellen einer Plantrajektorie und einer Wunschtrajektorie durch eine Manöverplanungseinrichtung in einem ersten Kraftfahrzeug, Übermitteln der Plantrajektorie und der Wunschtrajektorie an mindestens ein zweites Kraftfahrzeug im Umfeld über eine Manöverabstimmungseinrichtung des ersten Kraftfahrzeugs, wobei die Manöverabstimmungseinrichtung über eine Vehicle2Vehicle-Kommunikation mit dem zweiten Kraftfahrzeug kommuniziert, Empfangen der Plantrajektorie und der Wunschtrajektorie des ersten Kraftfahrzeugs durch eine Manöverabstimmungseinrichtung des zweiten Kraftfahrzeugs, Vergleichen der Plantrajektorie des zweiten Kraftfahrzeugs mit der empfangenen Wunschtrajektorie des ersten Kraftfahrzeugs in einer Manöverplanungseinrichtung des zweiten Kraftfahrzeugs, und sofern mindestens ein Anpassungskriterium erfüllt ist, Anpassen der Plantrajektorie des zweiten Kraftfahrzeugs durch die Manöverplanungseinrichtung des zweiten Kraftfahrzeugs zu einer angepassten Plantrajektorie, und wobei die Plan- und Wunschtrajektorien des ersten Kraftfahrzeugs mit einer strategischen Trajektorie des ersten Kraftfahrzeugs vereinbar sind und die Plantrajektorie und eine Wunschtrajektorie des zweiten Kraftfahrzeugs mit einer strategischen Trajektorie des zweiten Kraftfahrzeugs vereinbar sind, wobei die Plantrajektorien des ersten und des zweiten Kraftfahrzeugs zueinander kollisionsfrei sind, und wobei das Anpassungskriterium ist, dass die empfangene Wunschtrajektorie des ersten Kraftfahrzeugs mit der Plantrajektorie des zweiten Kraftfahrzeugs kollidiert und durch das Anpassen eine Gesamtkostenfunktion optimiert wird, wobei die Gesamtkostenfunktion zumindest Kostenfunktionen des ersten und des zweiten Kraftfahrzeugs umfasst.

Ferner wird eine Vorrichtung in einem ersten Kraftfahrzeug zum dezentralen Abstimmen von Fahrmanövern mit mindestens einem zweiten Kraftfahrzeug geschaffen, umfassend eine Manöverabstimmungseinrichtung zum Abstimmen von Fahrmanövern mit dem zweiten Kraftfahrzeug im Umfeld des ersten Kraftfahrzeugs, wobei die Manöverabstimmungseinrichtung mit einer Vehicle2Vehicle-Schnittstelle ausgestattet ist, um mit dem zweiten Kraftfahrzeug zu kommunizieren und eine Manöverplanungseinrichtung zum Bereitstellen einer Plantrajektorie und einer Wunschtrajektorie des ersten Kraftfahrzeugs, wobei die Manöverabstimmungseinrichtung derart ausgebildet ist, die bereitgestellte Plantrajektorie und die bereitgestellte Wunschtrajektorie des ersten Kraftfahrzeugs zumindest an das zweite Kraftfahrzeug zu übermitteln, und von dem zweiten Kraftfahrzeug übermittelte Plan- und Wunschtrajektorien zu empfangen, und wobei die Manöverplanungseinrichtung derart ausgebildet ist, bei Vorliegen eines Anpassungskriteriums die Plantrajektorie des ersten Kraftfahrzeugs in Abhängigkeit der empfangenen Wunschtrajektorie des zweiten Kraftfahrzeugs zu einer angepassten Plantrajektorie anzupassen, wobei die Plan- und Wunschtrajektorien des ersten Kraftfahrzeugs mit einer strategischen Trajektorie des ersten Kraftfahrzeugs vereinbar sind, wobei die Plantrajektorien des ersten und des zweiten Kraftfahrzeugs zueinander kollisionsfrei sind, und wobei das Anpassungskriterium ist, dass die empfangene Wunschtrajektorie des zweiten Kraftfahrzeugs mit der Plantrajektorie des ersten Kraftfahrzeugs kollidiert und durch das Anpassen eine Gesamtkostenfunktion optimiert wird, wobei die Gesamtkostenfunktion zumindest Kostenfunktionen des ersten und des zweiten Kraftfahrzeugs umfasst.

Die Idee der Erfindung ist, drei verschiedene Trajektorien bereitzustellen: Eine strategische Trajektorie, eine Plantrajektorie und eine Wunschtrajektorie. Die Plantrajektorie und die Wunschtrajektorie müssen dabei mit der strategischen Trajektorie stets vereinbar sein. Es wird davon ausgegangen, dass die Kraftfahrzeuge stets ein kooperatives Verhalten anstreben. Um Fahrmanöver mit einem oder mehreren anderen Kraftfahrzeugen kooperativ abzustimmen, übermittelt eine Manöverabstimmungseinrichtung die Plan- und die Wunschtrajektorie des Kraftfahrzeugs an die anderen Kraftfahrzeuge im Umfeld. Diese prüfen die empfangenen Plan- und Wunschtrajektorien dahingehend, ob sie mit der eigenen Plantrajektorie kollidieren und ob ein Anpassen der eigenen Plantrajektorie vorteilhaft wäre. Ist ein Anpassen vorteilhaft, so wird die Plantrajektorie angepasst und das Fahrverhalten entsprechen geändert. Das Kraftfahrzeug empfängt seinerseits Plan- und Wunschtrajektorien der anderen Kraftfahrzeuge und passt seine Plantrajektorie ebenfalls an, wenn dies nötig und vorteilhaft ist.

Der Vorteil des erfindungsgemäßen Verfahrens liegt darin, dass eine komplexe Bewertung der möglichen Anpassung des Fahrverhaltens des Kraftfahrzeugs möglich ist. Eine solche Bewertung über die Gesamtkostenfunktion optimiert die gesamte Verkehrssituation im Zusammenspiel mit den anderen Kraftfahrzeugen im Umfeld des Kraftfahrzeugs. Auf diese Weise können beispielsweise sowohl ein Verkehrsfluss als auch Kosten und eine Umweltbilanz optimal ausgestaltet werden, da unnötige Fahrmanöver, wie beispielsweise Abbremsen und Beschleunigen vermieden oder minimiert werden können. Dadurch steigt der Komfort für die Passagiere und die Kosten und der Aufwand automatisierter Fahrten werden reduziert.

Das Gewährleisten der Kollisionsfreiheit der Plantrajektorien heißt dabei konkret, dass die Plantrajektorien der Fahrzeuge so gestaltet sind, dass sich die Fahrzeuge zu keinem Zeitpunkt berühren. Dabei kann auch ein Toleranzbereich und/oder ein Minimalabstand mit berücksichtigt werden, beispielsweise ein Sicherheitsabstand von einigen Metern, der zwischen den Kraftfahrzeugen immer einzuhalten ist.

In einer Ausführungsform ist vorgesehen, dass nach dem Anpassen der Plantrajektorie des zweiten Kraftfahrzeugs, von der Manöverabstimmungseinrichtung des zweiten Kraftfahrzeugs die angepasste Plantrajektorie an die Manöverabstimmungseinrichtung des ersten Kraftfahrzeugs übermittelt wird und von der Manöverplanungseinrichtung des ersten Kraftfahrzeugs die Plantrajektorie des ersten Kraftfahrzeugs durch die Wunschtrajektorie des ersten Kraftfahrzeugs ersetzt wird. Dies ermöglicht eine schnelle Reaktion des ersten Kraftfahrzeugs auf das angepasste Fahrverhalten des zweiten Kraftfahrzeugs.

In einer weiteren Ausführungsform ist vorgesehen, dass das Optimieren der Gesamtkostenfunktion einen Vergleich von Kosten bei Ausführen der Plantrajektorien des ersten und zweiten Kraftfahrzeugs mit Kosten bei Ausführen der Wunschtrajektorie des ersten Kraftfahrzeugs und der angepassten Plantrajektorie des zweiten Kraftfahrzeugs umfasst. Dies ermöglicht eine detaillierte Abschätzung, ob ein Anpassen der Plantrajektorie des zweiten Kraftfahrzeugs vorteilhaft ist oder nicht.

In einer Ausführungsform ist vorgesehen, dass die Gesamtkostenfunktion eine Kostenfunktion mindestens eines weiteren Kraftfahrzeugs umfasst. Somit lässt sich eine Verkehrssituation bewerten, welche mehr als nur zwei Kraftfahrzeuge umfasst. Eine Berücksichtigung eines größeren Umfeldes durch Einbeziehen weiterer Kraftfahrzeuge in die Bewertung fördert somit das Abstimmen der gesamten lokalen Verkehrssituation.

In einer weiteren Ausführungsform ist vorgesehen, dass von den Manöverplanungseinrichtungen der mindestens zwei Kraftfahrzeuge zum Gewährleisten der Kollisionsfreiheit der Plantrajektorien ein Normalverhalten und mindestens ein Grundmanöver durchgeführt werden. Normalverhalten bedeutet, dass die Fahrzeuge die Spur halten und eine Geschwindigkeit v fahren. Die Geschwindigkeit v ist fahrzeugspezifisch von verschiedenen Faktoren abhängig wie z.B. der erlaubten Höchstgeschwindigkeit auf der befahrenen Straße. Das Grundmanöver ist notwendig, um stets Kollisionen vermeiden zu können. Das Grundmanöver besteht beispielsweise aus einem Bremsen bis zum Stillstand, einem im Straßenverkehr allgemein üblich und etablierten Verhalten zum Vermeiden von Kollisionen. Das Grundmanöver darf dabei immer angewandt werden, unabhängig von anderen Kraftfahrzeugen und deren Zielen in Form von Plantrajektorien. Weiterhin kann das Grundmanöver beispielsweise das Einhalten eines vorgegebenen Sicherheitsabstandes zum Vorderfahrzeug umfassen. Das Normalverhalten und das Grundmanöver ermöglichen es, dass eine Verkehrssituation jederzeit in einen sicheren Zustand überführt werden kann.

In einer Ausführungsform ist vorgesehen, dass die Wunschtrajektorien der mindestens zwei Kraftfahrzeuge eine Priorisierung aufweisen, so dass eine Rangfolge der Wunschtrajektorien erstellt werden kann, wobei die Rangfolge bestimmt, welche der Wunschtrajektorien bevorzugt umgesetzt wird. Dies ist von Vorteil, wenn es mehrere Kraftfahrzeuge im Umfeld gibt, die alle eine Wunschtrajektorie haben, welche sich teilweise oder sämtlich überschneiden. Durch das Erstellen der Rangfolge ist es dann möglich, die Wunschtrajektorien, zumindest für einen Teil der Kraftfahrzeuge, umzusetzen und dadurch die lokale Verkehrssituation abzustimmen und zu optimieren. Eine Priorisierung kann dabei beispielsweise nach einer Geschwindigkeit der Kraftfahrzeuge, nach einem Beladungszustand bzw. einem Gewicht der Kraftfahrzeuge (schwer beladen, leer etc.), einer Anzahl der Insassen, einem Kraftfahrzeugtyp (Benzin, Diesel, Hybrid, Elektro etc.) oder nach anderen Kriterien, beispielsweise einer Dringlichkeit, erfolgen.

In einer weiteren Ausführungsform ist vorgesehen, dass die Wunschtrajektorien der mindestens zwei Kraftfahrzeuge kollisionsfrei sind. Dabei ist gemeint, dass die Wunschtrajektorien vor einer Realisierung kollisionsfrei gestaltet werden müssen. Dies ermöglicht eine besonders einfache Möglichkeit, sämtliche Wunschtrajektorien umzusetzen.

In einer Ausführungsform ist vorgesehen, dass die Plantrajektorie und die Wunschtrajektorie des ersten Kraftfahrzeugs von der Manöverabstimmungseinrichtung nur an andere Kraftfahrzeuge in einem vorgegebenen Umfeld des ersten Kraftfahrzeugs übermittelt werden. Das Umfeld ist dabei beispielsweise begrenzt auf einen Umkreis von 50 m um das Kraftfahrzeug herum. Dies ermöglicht eine effiziente Umsetzung des Verfahren, da der Kommunikations- und Rechenaufwand minimiert wird. Je nach Verkehrssituation und Geschwindigkeit des Kraftfahrzeugs kann sich der Umkreis aber auch verkleinern oder vergrößern. So ist beispielsweise in einer Stausituation ein kleinerer Umkreis, auf einer freigegebenen Autobahn ein größerer Umkreis zweckmäßig.

Eine Ausführungsform sieht vor, dass für ein anderes Kraftfahrzeug, für das keine Plan- und/oder Wunschtrajektorien verfügbar sind, durch die Manöverabstimmungseinrichtung eine Schätzung über die Plantrajektorie des anderen Kraftfahrzeugs erstellt wird. Dies ermöglicht, andere Kraftfahrzeuge, welche beispielsweise nicht-automatisiert gefahren werden oder aus anderen Gründen keine Plan- und Wunschtrajektorien übermitteln, mit in die Abstimmung der Fahrmanöver einzubeziehen. Über die Schätzung der Plantrajektorie lässt sich dann beispielsweise von vornherein vermeiden, dass eine Wunschtrajektorie bereitgestellt wird, bei der es zu einer Kollision mit der geschätzten Plantrajektorie des anderen Kraftfahrzeugs kommt.

In einer weiteren Ausführungsform ist vorgesehen, dass die Plan- und die Wunschtrajektorie des ersten Kraftfahrzeugs von der Manöverabstimmungseinrichtung in regelmäßigen Zeitabständen und/oder bei Änderung der Plan- und/oder Wunschtrajektorie an das zweite Kraftfahrzeug und/oder ein anderes Kraftfahrzeug übermittelt wird. Dies hat den Vorteil, dass andere Kraftfahrzeuge im Umfeld des Kraftfahrzeugs stets über die Plantrajektorie und die Wunschtrajektorie des Kraftfahrzeugs informiert sind. Treten andere Kraftfahrzeuge in das Umfeld des Kraftfahrzeugs ein, so erhalten sie ebenfalls die Plan- und Wunschtrajektorien. Ändern sich hingegen die Plan- und die Wunschtrajektorie des Kraftfahrzeugs, so werden die Plan- und die Wunschtrajektorie sofort übermittelt, damit die anderen Kraftfahrzeuge sofort Kenntnis davon erlangen. Es wird dadurch möglich, die Verkehrssituation fortlaufend auf Basis der aktuellen Plan- und Wunschtrajektorien zu bewerten und abzustimmen.

Teile der Vorrichtung und/oder der Funktionen der Vorrichtung können auch als Kombination von Hardware und Software ausgebildet sein, beispielsweise in Form eines Mikrocontrollers oder Mikroprozessors, auf dem ein entsprechender Programmcode ausgeführt wird.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform einer Vorrichtung zum dezentralen Abstimmen von Fahrmanövern;
- Fig. 2: eine schematische Darstellung einer Verkehrssituation zur Erläuterung der auftretenden Probleme beim Abstimmen von Fahrmanövern;
- Fig. 3: eine schematische Darstellung einer Verkehrssituation zur Erläuterung der auftretenden Probleme beim Abstimmen von Fahrmanövern;
- Fig. 4: eine schematische Darstellung einer Verkehrssituation zur Erläuterung der auftretenden Probleme beim Abstimmen von Fahrmanövern;
- Fig. 5: eine schematische Darstellung einer Verkehrssituation zur Erläuterung des Verfahrens;
- Fig. 6: ein schematisches Ablaufdiagramm des Verfahrens.

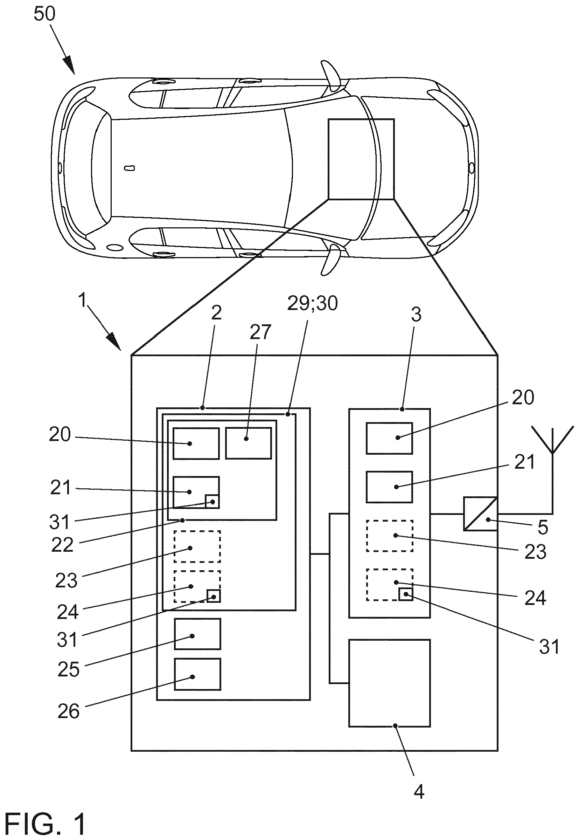

Fig. 1 zeigt eine schematische Darstellung einer Ausführungsform einer Vorrichtung 1 in einem Kraftfahrzeug 50 zum dezentralen Abstimmen von Fahrmanövern von mindestens zwei Kraftfahrzeugen. Die Vorrichtung 1 umfasst eine Manöverplanungseinrichtung 2 und eine Manöverabstimmungseinrichtung 3. Die Vorrichtung 1 kann eine Steuerung 4 umfassen, wobei die Steuerung 4 beispielsweise zum Steuern der Manöverplanungseinrichtung 2 und der Manöverabstimmungseinrichtung 3 oder zum Steuern einer automatisierten Fahrt dient. Die Vorrichtung 1 umfasst weiterhin eine Vehicle2Vehicel-Schnittstelle 5, über die die Manöverabstimmungseinrichtung 3 mit anderen Kraftfahrzeugen im Umfeld des Kraftfahrzeugs 50 kommunizieren kann.

Die Manöverplanungseinrichtung 2 plant fortlaufend eine Plantrajektorie 20 und eine Wunschtrajektorie 21 des Kraftfahrzeugs 50. Hierbei können die Plantrajektorie 20 und die Wunschtrajektorie 21 auch identisch sein, beispielsweise, wenn bereits eine bevorzugte Trajektorie durch die Plantrajektorie 20 abgefahren wird. Die Plantrajektorie 20 und die Wunschtrajektorie 21 werden dabei so geplant, dass sie mit einer strategischen Trajektorie 22 des Kraftfahrzeugs 50 vereinbar sind.

Die Plantrajektorie 20 und die Wunschtrajektorie 21 werden von der Manöverplanungseinrichtung 2 an die Manöverabstimmungseinrichtung 3 übermittelt, welche die Plantrajektorie 20 und die Wunschtrajektorie 21 über die Car2Car-Schnittstelle 5 an mindestens eine anderes Kraftfahrzeug im Umfeld des Kraftfahrzeugs 50 übermittelt. Zusätzlich kann die Manöverabstimmungseinrichtung 3 eine Plantrajektorie 23 und eine Wunschtrajektorie 24 eines anderen Kraftfahrzeugs empfangen. Generell hält die Manöverabstimmungseinrichtung 3 dabei die Trajektorien anderer Kraftfahrzeuge so lange vor, bis aktuellere Trajektorien empfangen werden. Die empfangene Plantrajektorie 23 und die empfangene Wunschtrajektorie 24 des anderen Kraftfahrzeugs werden von der Manöverabstimmungseinrichtung 3 an die Manöverplanungseinrichtung 2 weitergeleitet, welche die Plantrajektorie 23 und die Wunschtrajektorie 24 des anderen Kraftfahrzeugs mit in die Planung der eigenen Plantrajektorie 20 und der Wunschtrajektorie 21 des Kraftfahrzeugs 50 mit einbezieht. Dazu wird als erstes von der Manöverplanungseinrichtung 2 überprüft, ob die Plantrajektorie 23 des anderen Kraftfahrzeugs mit der Plantrajektorie 20 des Kraftfahrzeugs 50 kollisionsfrei sind. Kollidieren die Plantrajektorien 20, 23, so wird ein Grundmanöver 25 durchgeführt, wobei die Plantrajektorie 20 derart angepasst wird, dass das Kraftfahrzeug 50 entweder durch Abbremsen möglichst schnell zum Stillstand kommt oder so dass eine Kollision vermieden wird. Kollidieren die Plantrajektorien 20, 23 nicht, so wird von der Manöverplanungseinrichtung 2 überprüft, ob ein Anpassungskriterium 29 erfüllt ist. Dazu wird überprüft, ob die von dem anderen Kraftfahrzeug empfangene Wunschtrajektorie 24 mit der Plantrajektorie 20 des Kraftfahrzeugs 50 kollidiert. Ist dies nicht der Fall, so wird die Plantrajektorie 20 beibehalten. Kollidiert hingegen die Wunschtrajektorie 24 des anderen Kraftfahrzeugs mit der Plantrajektorie 20 des Kraftfahrzeugs 50, so prüft die Manöverplanungseinrichtung 2, ob ein Anpassen der Plantrajektorie 20 vorteilhaft ist. Dafür wertet sie eine Gesamtkostenfunktion 30 aus. Bei der Auswertung werden die Kosten einer Durchführung der Plantrajektorien 20, 23 mit einer Durchführung einer angepassten Plantrajektorie 27 des Kraftfahrzeug 50 und der Wunschtrajektorie 24 des anderen Kraftfahrzeugs verglichen. Ist ein Anpassen vorteilhaft, so ist das Anpassungskriterium 29 erfüllt und die Plantrajektorie 20 wird angepasst, das heißt die Plantrajektorie 20 wird durch die angepasste Plantrajektorie 27 ersetzt. Ist ein Anpassen nicht vorteilhaft, so ist das Anpassungskriterium 29 nicht erfüllt und die Plantrajektorie 20 wird nicht durch die angepasste Plantrajektorie 27 ersetzt.

Die angepasste Trajektorie 27 wird anschließend an die Manöverabstimmungseinrichtung 3 weitergeleitet, welche die angepasste Plantrajektorie 27 über die Vehicle2Vehicle-Schnittstelle an das andere Kraftfahrzeug übermittelt. Das andere Kraftfahrzeug kann dann seine Plantrajektorie 23 durch seine Wunschtrajektorie 24 ersetzen.

Zusätzlich können neben den Plantrajektorien 20, 27 und Wunschtrajektorie 21 von der Manöverabstimmungseinrichtung 3 weitere Informationen übermittelt werden, beispielsweise eine Priorisierung 31 zu der Wunschtrajektorie 21. Die Priorisierung 31 ermöglicht das Erstellen einer Rangfolge der Wunschtrajektorien bei Vorliegen mehrerer kollidierender Wunschtrajektorien mehrerer anderer Kraftfahrzeuge im Umfeld des Kraftfahrzeugs 50.

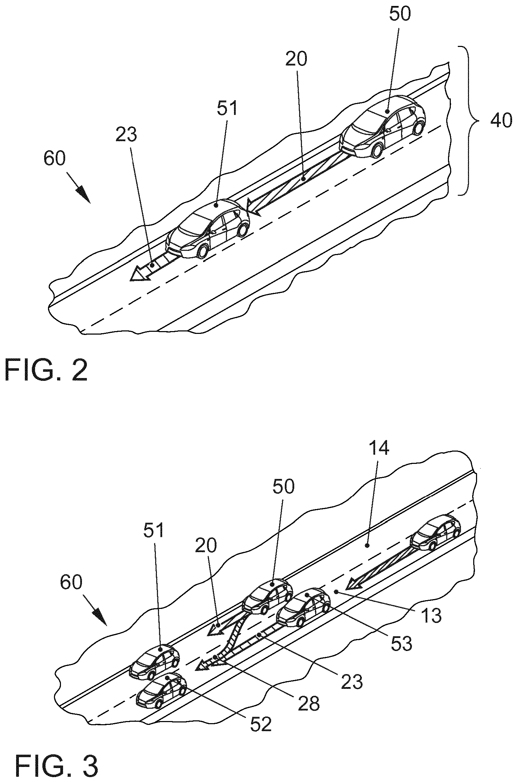

Die Figuren 2 bis 5 zeigen schematisch verschiedene Verkehrssituationen 60 zur Erläuterung der Probleme beim Abstimmen von Fahrmanövern von mehreren Kraftfahrzeugen. Gleiche Bezugszeichen bezeichnen dabei gleiche Gegenstände.

Fig. 2 zeigt hierbei eine typische Verkehrssituation 60 auf einer Straße 40 mit zwei Fahrspuren. Dabei befindet sich vor einem Kraftfahrzeug 50 ein anderes Kraftfahrzeug 51. Beide Kraftfahrzeuge 50, 51 befolgen dabei grundsätzlich jederzeit ein Normalverhalten 25 und können jederzeit mindestens ein Grundmanöver 26 durchführen. Die Plantrajektorie 23 des anderen Kraftfahrzeugs 51 und die Plantrajektorie 20 des Kraftfahrzeugs 50 sind schematisch als Vektoren vor den Kraftfahrzeugen 50, 51 dargestellt. Die Plantrajektorien 20, 23 werden in regelmäßigen Abständen von jeweils einer erfindungsgemäßen Vorrichtung ausgesandt, damit die Fahrmanöver der beiden Kraftfahrzeuge 50, 51 kooperativ abgestimmt werden können.

Zur Verdeutlichung kollidiert in diesem Beispiel die Plantrajektorie 20 des Kraftfahrzeugs 50 mit der Plantrajektorie 23 des anderen Kraftfahrzeugs 51. Dies wird von der Manöverplanungseinrichtung erkannt und das Kraftfahrzeug 50 kann zur Vermeidung einer Kollision das Grundmanöver durchführen, das heißt es bremst ab bis zum Stillstand, um in einen sicheren Zustand zu gelangen. Dieser Zustand hat jedoch den Nachteil, dass dadurch Verkehrsteilnehmer ihre Ziele nicht oder langsamer erreichen.

Das andere Kraftfahrzeug 51 ist zu langsam für das Kraftfahrzeug 50, deshalb wäre es für das Kraftfahrzeug 50 in dieser Situation vorteilhafter, wenn es das andere Kraftfahrzeug 51 überholen würde.

Dieser Fall ist in Fig. 3 abgebildet, wobei die Verkehrssituation 60 etwas erweitert wurde. In der gezeigten Verkehrssituation 60 ist die Fahrspur des Kraftfahrzeugs 50 durch ein anderes Kraftfahrzeug 51 blockiert. Auf der Überholspur 13 ist der Verkehr sehr dicht auf Grund anderer Kraftfahrzeuge 52, 53, so dass keine ausreichend große Lücke für das Kraftfahrzeug 50 vorhanden ist, um von der Fahrspur 14 auf die Überholspur 13 zu wechseln. Das Normalverhalten erlaubt auf Grund der Kollisionsfreiheit der Plantrajektorien 23, 20 nicht, die Trajektorie 28 zu planen und auszusenden. Die Trajektorie 28 würde mit der Plantrajektorie 23 des anderen Kraftfahrzeugs 53 kollidieren. Dies führt dazu, dass das Kraftfahrzeug 50 in dieser Verkehrssituation 60 nur das Grundmanöver 26 durchführen kann. Es muss abbremsen und anhalten und kann dadurch die eigenen Ziele nicht oder nur langsamer erreichen.

Es muss also eine Möglichkeit geben, eine gezielte Kollision der Trajektorien herbeizuführen. Dafür könnte über die Trajektorie 28 absichtlich eine Kollision mit der Plantrajektorie 23 herbeigeführt werden. Ausgehend davon, dass sich die anderen Kraftfahrzeuge 51, 52, 53 normal verhalten, würde das andere Kraftfahrzeug 53 die Kollision feststellen und seine Plantrajektorie 23 so anpassen, dass die Kollision nicht erfolgt. Dazu würde es abbremsen. Dieses Vorgehen hat jedoch zwei Nachteile. Erstens wird dem anderen Kraftfahrzeug 53 ein Fahrmanöver aufgezwungen und das andere Kraftfahrzeug 53 hat keine Möglichkeit, ein Veto einzulegen, da es dem Normalverhalten entsprechen muss. Somit wäre eine solche Lösung kein kooperatives Fahrmanöver. Zweitens wäre die Trajektorie 28 nicht mehr eindeutig. Eigentlich ist eine Trajektorie eine Information für andere Kraftfahrzeuge 51, 52, 53, mit der sie die zukünftigen Fahrmanöver des Kraftfahrzeuges 50 vorhersagen können. Wenn diese Trajektorie 28 nun dazu genutzt wird, um gezielt eine Kollision herbeizuführen, wird nach außen ein Plan gezeigt, der vielleicht gar nicht durchgeführt werden kann. In diesem Fall wäre das Kraftfahrzeug 50 davon abhängig, ob das andere Kraftfahrzeug 53 seine Plantrajektorie 50 anpasst oder nicht. Für den Fall, dass das andere Kraftfahrzeug 53 dies nicht tut (physikalisch vielleicht unmöglich), muss das Kraftfahrzeug 50 einen alternativen Plan haben, z.B. geradeaus fahren. Da aber dieser alternative Plan nicht nach außen kommuniziert wird, kann es sein, dass andere Kraftfahrzeuge 51, 52, 53 diesen Plan unwissentlich vereiteln.

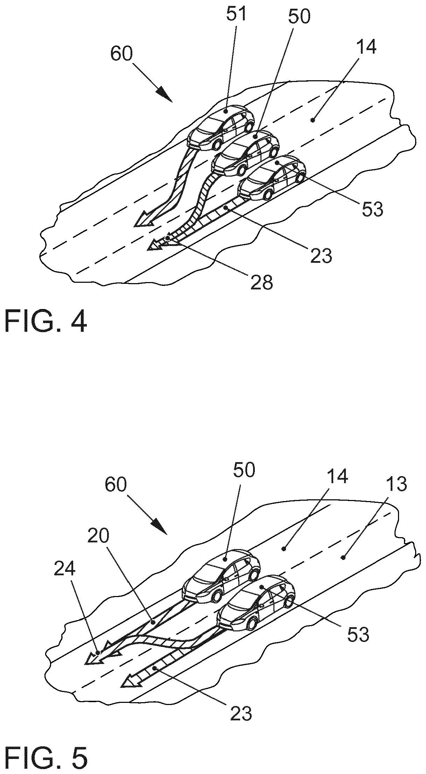

Fig. 4 zeigt eine solche Verkehrssituation 60, in der ein anderes Kraftfahrzeug 51 die Alternative, weiter geradeaus zu fahren, behindert, indem es auf die Fahrspur 14 des Kraftfahrzeugs 50 wechselt. Somit ist die Nutzung lediglich der Plantrajektorie ungeeignet, um gezielt Kollisionen der Trajektorien zu provozieren.

Um das Problem zu lösen, wird erfindungsgemäß eine Wunschtrajektorie eingeführt. Die Wunschtrajektorie wird immer dann genutzt, wenn ein Kraftfahrzeug 50, 51 vom Normalverhalten abweicht. Die Wunschtrajektorie wird zusammen mit der Plantrajektorie 20 in regelmäßigen zeitlichen Abständen an alle in der Nähe befindlichen anderen Kraftfahrzeuge 51, 52, 53 übermittelt.

In der in der Fig. 5 schematisch dargestellten Verkehrssituation 60 ist der Wunsch des anderen Kraftfahrzeugs 53, von der Überholspur 13 auf die Fahrspur 14 des Kraftfahrzeugs 50 zu wechseln. Die Plantrajektorien 20, 23 der beiden Kraftfahrzeuge 50, 53 weichen nicht von dem Normalverhalten ab. Erfindungsgemäß übermittelt das andere Kraftfahrzeug 53 seine Plantrajektorie 23 und seine Wunschtrajektorie 24 an das Kraftfahrzeug 50. Das Kraftfahrzeug 50 kann nun erfindungsgemäß die Situation beurteilen und bewerten. Ist ein Anpassen der Plantrajektorie 20 des Kraftfahrzeugs 50 vorteilhaft, das Anpassungskriterium also erfüllt, so wird die Plantrajektorie 20 angepasst. Die angepasste Plantrajektorie kollidiert dann nicht mehr mit der Wunschtrajektorie 24 des anderen Kraftfahrzeugs 53. Ist das Anpassen hingegen nicht vorteilhaft, so ist das Anpassungskriterium nicht erfüllt und erfolgt kein Anpassen der Plantrajektorie 20 des Kraftfahrzeugs 50.

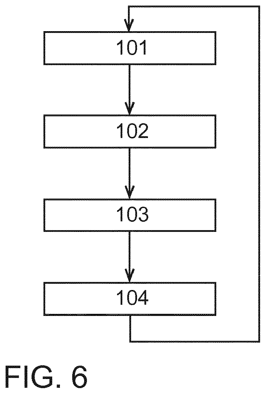

Fig. 6 zeigt ein schematisches Ablaufdiagramm des erfindungsgemäßen Verfahrens zum dezentralen Abstimmen von Fahrmanövern. In einem ersten Verfahrensschritt 101 werden von einer Manöverabstimmungseinrichtung Plantrajektorien und Wunschtrajektorien von mindestens einem anderen Kraftfahrzeug empfangen über eine Vehicle2Vehicle-Schnittstelle. Im nächsten Verfahrensschritt 102 plant eine Manöverplanungseinrichtung dann eine Plantrajektorie für das Kraftfahrzeug, die unter Berücksichtigung der Plantrajektorie des mindestens einen anderen Kraftfahrzeugs, vorzugsweise auch der Wunschtrajektorie des mindestens einen anderen Kraftfahrzeugs, kollisionsfrei ist und vorgegebene Sicherheitskriterien erfüllt. Im anschließenden Verfahrensschritt 103 wird von der Manöverplanungseinrichtung eine Wunschtrajektorie für das Kraftfahrzeug geplant, wobei Wunschtrajektorie gegenüber der Plantrajektorie bevorzugt würde, jedoch nicht notwendigerweise kollisionsfrei mit Plantrajektorien anderer Kraftfahrzeuge ist. Im letzten Verfahrensschritt 104 werden die Plan- und die Wunschtrajektorien an die Manöverabstimmungseinrichtung übergeben und von dieser an das mindestens eine andere Kraftfahrzeug in dem Umfeld des Kraftfahrzeugs über die Vehicle2Vehicle-Schnittstelle übermittelt. Anschließend werden die Verfahrensschritte 101, 102, 103, 104 wiederholt. Prinzipiell ist es dabei auch möglich, das Verfahren mit dem Verfahrensschritt 102 zu beginnen.

### Bezugszeichenliste

- 1: Vorrichtung
- 2: Manöverplanungseinrichtung
- 3: Manöverabstimmungseinrichtung
- 4: Steuerung
- 5: Vehicle2Vehicle-Schnittstelle
- 13: Überholspur
- 14: Fahrspur
- 20: Plantrajektorie
- 21: Wunschtrajektorie
- 22: strategische Trajektorie
- 23: Plantrajektorie des anderen Kraftfahrzeugs
- 24: Wunschtrajektorie des anderen Kraftfahrzeugs
- 25: Normalverhalten
- 26: Grundmanöver
- 27: angepasste Plantrajektorie
- 28: Trajektorie
- 29: Anpassungskriterium
- 30: Gesamtkostenfunktion
- 31: Priorisierung
- 40: Straße
- 50: Kraftfahrzeug
- 51: anderes Kraftfahrzeug
- 52: anderes Kraftfahrzeug
- 53: anderes Kraftfahrzeug
- 60: Verkehrssituation
- 101-104: Verfahrenschritte

## Patentansprüche

1. Verfahren zum dezentralen Abstimmen von Fahrmanövern von mindestens zwei Kraftfahrzeugen (50, 51, 52, 53), umfassend die folgenden Schritte:
Bereitstellen einer Plantrajektorie (20) und einer Wunschtrajektorie (21) durch eine Manöverplanungseinrichtung (2) in einem ersten Kraftfahrzeug (50),
Übermitteln der Plantrajektorie (20) und der Wunschtrajektorie (21) an mindestens ein zweites Kraftfahrzeug (51, 52, 53) im Umfeld über eine Manöverabstimmungseinrichtung (3) des ersten Kraftfahrzeugs (50), wobei die Manöverabstimmungseinrichtung (3) über eine Vehicle2Vehicle-Schnittstelle (5) mit dem zweiten Kraftfahrzeug (51, 52, 53) kommuniziert,
Bereitstellen einer Plantrajektorie (23) und einer Wunschtrajektorie (24) durch eine Manöverplanungseinrichtung (2) in dem zweiten Kraftfahrzeug (51, 52, 53), Empfangen der Plantrajektorie (20) und der Wunschtrajektorie (21) des ersten Kraftfahrzeugs (50) durch eine Manöverabstimmungseinrichtung (3) des zweiten Kraftfahrzeugs (51, 52, 53),
Vergleichen der Plantrajektorie (23) des zweiten Kraftfahrzeugs (51, 52, 53) mit der empfangenen Wunschtrajektorie (21) des ersten Kraftfahrzeugs (50) in einer Manöverplanungseinrichtung (2) des zweiten Kraftfahrzeugs (51, 52, 53), und sofern mindestens ein Anpassungskriterium (29) erfüllt ist,
Anpassen der Plantrajektorie (23) des zweiten Kraftfahrzeugs (51, 52, 53) durch die Manöverplanungseinrichtung (2) des zweiten Kraftfahrzeugs (51, 52, 53) zu einer angepassten Plantrajektorie (27),
**dadurch gekennzeichnet, dass**
die Plan- und Wunschtrajektorien (20, 21) des ersten Kraftfahrzeugs (50) mit einer strategischen Trajektorie (22) des ersten Kraftfahrzeugs (50) vereinbar sind und die Plantrajektorie (23) und eine Wunschtrajektorie (24) des zweiten Kraftfahrzeugs (51, 52, 53) mit einer strategischen Trajektorie des zweiten Kraftfahrzeugs (51, 52, 53) vereinbar sind,
wobei die Plantrajektorien (20, 23) des ersten und des zweiten Kraftfahrzeugs (50, 51, 52, 53) zueinander kollisionsfrei sind,
und wobei das Anpassungskriterium (29) ist, dass die empfangene Wunschtrajektorie (21) des ersten Kraftfahrzeugs (50) mit der Plantrajektorie (23) des zweiten Kraftfahrzeugs (51, 52, 53) kollidiert und durch das Anpassen eine Gesamtkostenfunktion (30) optimiert wird, wobei die Gesamtkostenfunktion (30) zumindest Kostenfunktionen des ersten und des zweiten
Kraftfahrzeugs (50, 51, 52, 53) umfasst.

2. Verfahren nach Anspruch 1, **dadurch gekennzeichnet, dass** nach dem Anpassen der Plantrajektorie (23) des zweiten Kraftfahrzeugs (51, 52, 53), von der Manöverabstimmungseinrichtung (3) des zweiten Kraftfahrzeugs (51, 52, 53) die angepasste Plantrajektorie (27) an die Manöverabstimmungseinrichtung (3) des ersten Kraftfahrzeugs (50) übermittelt wird und von der Manöverplanungseinrichtung (2) des ersten Kraftfahrzeugs (50) die Plantrajektorie (20) des ersten Kraftfahrzeugs (50) durch die Wunschtrajektorie (21) des ersten Kraftfahrzeugs (50) ersetzt wird.

3. Verfahren nach Anspruch 1 oder 2, **dadurch gekennzeichnet, dass** das Optimieren der Gesamtkostenfunktion (30) einen Vergleich von Kosten bei Ausführen der Plantrajektorien (20, 23) des ersten und zweiten Kraftfahrzeugs (50, 51, 52, 53) mit Kosten bei Ausführen der Wunschtrajektorie (21) des ersten Kraftfahrzeugs (50) und der angepassten Plantrajektorie (27) des zweiten Kraftfahrzeugs (51, 52, 53) umfasst.

4. Verfahren nach einem der vorangegangenen Ansprüche, **dadurch gekennzeichnet, dass** von den Manöverplanungseinrichtungen (2) der mindestens zwei Kraftfahrzeuge (50, 51, 52, 53) zum Gewährleisten der Kollisionsfreiheit der Plantrajektorien (20, 23) ein Normalverhalten (25) und mindestens ein Grundmanöver (26) durchgeführt werden.

5. Verfahren nach einem der vorangegangenen Ansprüche, **dadurch gekennzeichnet, dass** die Wunschtrajektorien (21, 24) der mindestens zwei
Kraftfahrzeuge (50, 51, 52, 53) eine Priorisierung (31) aufweisen, so dass eine Rangfolge der Wunschtrajektorien (21, 24) erstellt werden kann, wobei die Rangfolge bestimmt, welche der Wunschtrajektorien (21, 24) bevorzugt umgesetzt wird.

6. Verfahren nach einem der vorangegangenen Ansprüche, **dadurch gekennzeichnet, dass** die Wunschtrajektorien (21, 24) der mindestens zwei
Kraftfahrzeuge (50, 51, 52, 53) kollisionsfrei sind.

7. Verfahren nach einem der vorangegangenen Ansprüche, **dadurch gekennzeichnet, dass** die Plantrajektorie (20) und die Wunschtrajektorie (21) des ersten Kraftfahrzeugs (50) von der Manöverabstimmungseinrichtung (3) nur an andere Kraftfahrzeuge (51, 52, 53) in einem vorgegebenen Umfeld des ersten Kraftfahrzeugs (50) übermittelt werden.

8. Verfahren nach einem der vorangegangenen Ansprüche, **dadurch gekennzeichnet, dass** für ein anderes Kraftfahrzeug (51, 52, 53), für das keine Plan- (20, 23) und/oder Wunschtrajektorien (21, 24) verfügbar sind, durch die Manöverabstimmungseinrichtung (3) eine Schätzung über die Plantrajektorie (20, 23) des anderen Kraftfahrzeugs (50) erstellt wird.

9. Verfahren nach einem der vorangegangenen Ansprüche, **dadurch gekennzeichnet, dass** die Plan- (20) und die Wunschtrajektorie (21) des ersten Kraftfahrzeugs (50) von der Manöverabstimmungseinrichtung (3) in regelmäßigen Zeitabständen und/oder bei Änderung der Plan- (20) und/oder Wunschtrajektorie (21) an das zweite Kraftfahrzeug (51, 52, 53) und/oder ein anderes Kraftfahrzeug (51, 52, 53) übermittelt wird.

10. Vorrichtung (1) für ein erstes Kraftfahrzeug (50) zum dezentralen Abstimmen von Fahrmanövern mit mindestens einem zweiten Kraftfahrzeug (51, 52, 53), umfassend:
eine Manöverabstimmungseinrichtung (3) zum Abstimmen von Fahrmanövern mit dem zweiten Kraftfahrzeug (51, 52, 53) im Umfeld des ersten Kraftfahrzeugs (50), wobei die Manöverabstimmungseinrichtung (3) mit einer Vehicle2Vehicle-Schnittstelle (5) ausgestattet ist, um mit dem zweiten Kraftfahrzeug (51, 52, 53) zu kommunizieren und eine Manöverplanungseinrichtung (2) zum Bereitstellen einer Plantrajektorie (20) und einer Wunschtrajektorie (21) des ersten Kraftfahrzeugs (50),
wobei die Manöverabstimmungseinrichtung (3) derart ausgebildet ist, die bereitgestellte Plantrajektorie (20) und die bereitgestellte Wunschtrajektorie (21) des ersten Kraftfahrzeugs (50) zumindest an das zweite Kraftfahrzeug (51, 52, 53) zu übermitteln, und von dem zweiten Kraftfahrzeug (51, 52, 53) übermittelte Plan- (23) und Wunschtrajektorien (24) einer Manöverplanungseinrichtung (2) des zweiten Kraftfahrzeugs (51, 52, 53) zu empfangen,
und wobei die Manöverplanungseinrichtung (2) derart ausgebildet ist, bei Vorliegen eines Anpassungskriteriums (29) die Plantrajektorie (20) des ersten Kraftfahrzeugs (50) in Abhängigkeit der empfangenen Wunschtrajektorie (24) des zweiten Kraftfahrzeugs (51, 52, 53) zu einer angepassten Plantrajektorie (27) anzupassen,
**dadurch gekennzeichnet, dass**
die Plan-(20) und Wunschtrajektorien (21) des ersten Kraftfahrzeugs (50) mit einer strategischen Trajektorie (22) des ersten Kraftfahrzeugs (50) vereinbar sind,
wobei die Plantrajektorien (20, 23) des ersten und des zweiten Kraftfahrzeugs (50, 51, 52, 53) zueinander kollisionsfrei sind,
und wobei das Anpassungskriterium (29) ist, dass die empfangene Wunschtrajektorie (24) des zweiten Kraftfahrzeugs (51, 52, 53) mit der Plantrajektorie (20) des ersten Kraftfahrzeugs (50) kollidiert und durch das Anpassen eine Gesamtkostenfunktion (30) optimiert wird, wobei die Gesamtkostenfunktion (30) zumindest Kostenfunktionen des ersten und des zweiten Kraftfahrzeugs umfasst.

## Claims

1. Method for the decentralized coordination of driving maneuvers of at least two motor vehicles (50, 51, 52, 53), comprising the following steps:
providing a planned trajectory (20) and a desired trajectory (21) by means of a maneuver planning device (2) in a first motor vehicle (50),
communicating the planned trajectory (20) and the desired trajectory (21) to at least one second motor vehicle (51, 52, 53) in the environment via a maneuver-coordinating device (3) of the first motor vehicle (50), wherein the maneuver-coordinating device (3) communicates with the second motor vehicle (51, 52, 53) via a vehicle2vehicle interface (5),
providing a planned trajectory (23) and a desired trajectory (24) by means of a maneuver-planning device (2) in the second motor vehicle (51, 52, 53),
receiving the planned trajectory (20) and the desired trajectory (21) of the first motor vehicle (50) by means of a maneuver-coordinating device (3) of the second motor vehicle (51, 52, 53),
comparing the planned trajectory (23) of the second motor vehicle (51, 52, 53) with the received desired trajectory (21) of the first motor vehicle (50) in a maneuver-planning device (2) of the second motor vehicle (51, 52, 53), and, provided at least one adjustment criterion (29) is met,
adjusting the planned trajectory (23) of the second motor vehicle (51, 52, 53) by the maneuver-planning device (2) of the second motor vehicle (51, 52, 53) to an adjusted planned trajectory (27),
**characterized in that**
the planned and desired trajectories (20, 21) of the first motor vehicle (50) are compatible with a strategic trajectory (22) of the first motor vehicle (50), and the planned trajectory (23) and a desired trajectory (24) of the second motor vehicle (51, 52, 53) are compatible with a strategic trajectory of the second motor vehicle (51, 52, 53),
wherein the planned trajectories (20, 23) of the first and the second motor vehicles (50 51 52 53) are collision-free with respect to one another,
and wherein the adjustment criterion (29) is that the received desired trajectory (21) of the first motor vehicle (50) collides with the planned trajectory (23) of the second motor vehicle (51, 52, 53) and is optimized by adjusting an overall cost function (30), wherein the overall cost function (30) comprises at least cost functions of the first and second motor vehicles (50, 51, 52, 53).

2. Method according to Claim 1, **characterized in that** after adjustment of the planned trajectory (23) of the second motor vehicle (51, 52, 53), the adjusted planned trajectory (27) is transmitted by the maneuver-coordinating device (3) of the second motor vehicle (51, 52, 53) to the maneuver-coordinating device (3) of the first motor vehicle (50) and the planned trajectory (20) of the first motor vehicle (50) is replaced by the maneuver-planning device (2) with the desired trajectory (21) of the first motor vehicle (50).

3. Method according to Claims 1 or 2, **characterized in that** the optimization of the overall cost function (30) comprises a comparison of costs when executing the planned trajectories (20, 23) of the first and second motor vehicles (50, 51, 52, 53) with costs when executing the desired trajectory (21) of the first motor vehicle (50) and the adjusted planned trajectory (27) of the second motor vehicle (51, 52, 53).

4. Method according to any one of the preceding claims, **characterized in that** a normal behavior (25) and at least one basic maneuver (26) are carried out by the maneuver-planning devices (2) of the at least two motor vehicles (50, 51, 52, 53) in order to ensure that the planned trajectories (20, 23) do not collide.

5. Method according to any one of the preceding claims, **characterized in that** the desired trajectories (21, 24) of the at least two motor vehicles (50, 51, 52, 53) have a prioritization (31) so that a ranking of the desired trajectories (21, 24) can be established, wherein the ranking determines which of the desired trajectories (21 24) is preferably implemented.

6. Method according to any one of the preceding claims, **characterized in that** the desired trajectories (21, 24) of the at least two motor vehicles (50, 51, 52, 53) do not collide.

7. Method according to any one of the preceding claims, **characterized in that** the planned trajectory (20) and the desired trajectory (21) of the first motor vehicle (50) are transmitted by the maneuver-coordinating device (3) only to other motor vehicles (51, 52, 53) in a predetermined environment of the first motor vehicle (50).

8. Method according to any one of the preceding claims, **characterized in that** for another motor vehicle (51, 52, 53) for which no planned trajectories (20, 23) and/or desired trajectories are available, an estimate is made by the maneuver-coordinating device (3) regarding the planned trajectory (20, 23) of the other motor vehicle (50).

9. Method according to any one of the preceding claims, **characterized in that** the planned (20) and the desired trajectories (21) of the first motor vehicle (50) are transmitted by the maneuver-coordinating device (3) to the second motor vehicle (51, 52, 53) and/or another motor vehicle (51, 52, 53) at fixed time intervals and/or when the planned (20) and/or desired trajectory (21) changes.

10. Device (1) for a first motor vehicle (50) for the decentralized coordination of driving maneuvers with at least one second motor vehicle (51, 52, 53), comprising: a maneuver-coordinating device (3) to coordinate driving maneuvers with the second motor vehicle (51, 52, 53) in the vicinity of the first motor vehicle (50), wherein the maneuver-coordinating device (3) is equipped with a vehicle2vehicle interface (5) to communicate with the second motor vehicle (51, 52, 53) and a maneuver-planning device (2) for providing a planned trajectory (20) and a desired trajectory (21) of the first motor vehicle (50),
wherein the maneuver-coordinating device (3) is designed to transmit the provided planned trajectory (20) and the provided desired trajectory (21) of the first motor vehicle (50) to at least the second motor vehicle (51, 52, 53) and to receive planned (23) and desired trajectories (24) of a maneuver-planning device (2) of the second motor vehicle (51, 52, 53) transmitted by the second motor vehicle,
and wherein the maneuver-planning device (2) is designed, when an adjustment criterion (29) is present, to adjust the planned trajectory (20) of the first motor vehicle (50) as a function of the received desired trajectory (24) of the second motor vehicle (51, 52, 53) to an adjusted planned trajectory (27),
**characterized in that**
the planned (20) and desired trajectories (21) of the first motor vehicle (50) are compatible with a strategic trajectory (22) of the first motor vehicle (50),
wherein the planned trajectories (20, 23) of the first and the second motor vehicles (50, 51, 52, 53) are collision-free with respect to one another,
and wherein the adjustment criterion (29) is that the received desired trajectory (24) of the second motor vehicle (51, 52, 53) collides with the planned trajectory (20) of the first motor vehicle (50) and is optimized by adjusting an overall cost function (30), wherein the overall cost function (30) comprises at least cost functions of the first and second motor vehicles.

## Revendications

1. Procédé de coordination décentralisée de manœuvres de conduite d'au moins deux véhicules automobiles (50, 51, 52, 53) comprenant les étapes suivantes :
fourniture d'une trajectoire planifiée (20) et d'une trajectoire souhaitée (21) par l'intermédiaire d'un dispositif de planification de manœuvres (2) dans un premier véhicule automobile (50),
transmission de la trajectoire planifiée (20) et de la trajectoire souhaitée (21) à au moins un deuxième véhicule automobile (51, 52, 53) dans l'environnement par le biais d'un dispositif de coordination de manœuvres (3) du premier véhicule automobile (50), le dispositif de coordination de manœuvres (3) communiquant par le biais d'une interface de véhicule à véhicule (5) avec le deuxième véhicule automobile (51, 52, 53),
fourniture d'une trajectoire planifiée (23) et d'une trajectoire souhaitée (24) par l'intermédiaire d'un dispositif de planification de manœuvres (2) dans le deuxième véhicule automobile (51, 52, 53),
réception de la trajectoire planifiée (20) et de la trajectoire souhaitée (21) du premier véhicule automobile (50) par le biais d'un dispositif de coordination de manœuvres (3) du deuxième véhicule automobile (51, 52, 53),
comparaison de la trajectoire planifiée (23) du deuxième véhicule automobile (51, 52, 53) à la trajectoire souhaitée (21) reçue du premier véhicule automobile (50) dans un dispositif de planification de manœuvres (2) du deuxième véhicule automobile (51, 52, 53) et, dans la mesure où au moins un critère d'adaptation (29) est satisfait,
adaptation de la trajectoire planifiée (23) du deuxième véhicule automobile (51, 52, 53) par le biais du dispositif de planification de manœuvres (2) du deuxième véhicule automobile (51, 52, 53) en une trajectoire planifiée adaptée (27),
**caractérisé en ce que**
les trajectoires planifiée et souhaitée (20, 21) du premier véhicule automobile (50) sont compatibles avec une trajectoire stratégique (22) du premier véhicule automobile (50) et la trajectoire planifiée (23) et une trajectoire souhaitée (24) du deuxième véhicule automobile (51, 52, 53) sont compatibles avec une trajectoire stratégique du deuxième véhicule automobile (51, 52, 53),
les trajectoires planifiées (20, 23) des premier et deuxième véhicules automobiles (50, 51, 52, 53) étant exemptes de collision entre elles,
et le critère d'adaptation (29) étant que la trajectoire souhaitée (21) reçue du premier véhicule automobile (50) entre en collision avec la trajectoire planifiée (23) du deuxième véhicule automobile (51, 52, 53) et est optimisée par le biais de l'adaptation une fonction de coût global (30), la fonction de coût global (30) comprenant au moins des fonctions de coût des premier et deuxième véhicules automobiles (50, 51, 52, 53).

2. Procédé selon la revendication 1, **caractérisé en ce que,** après l'adaptation de la trajectoire planifiée (23) du deuxième véhicule automobile (51, 52, 53), depuis le dispositif de coordination de manœuvres (3) du deuxième véhicule automobile (51, 52, 53), la trajectoire planifiée adaptée (27) est transmise au dispositif de coordination de manœuvres (3) du premier véhicule automobile (50) et, par le dispositif de planification de manœuvres (2) du premier véhicule automobile (50), la trajectoire planifiée (20) du premier véhicule automobile (50) est remplacée par la trajectoire souhaitée (21) du premier véhicule automobile (50).

3. Procédé selon la revendication 1 ou 2, **caractérisé en ce que** l'optimisation de la fonction de coût globale (30) comprend une comparaison des coûts lors de la réalisation des trajectoires planifiées (20, 23) des premier et deuxième véhicules automobiles (50, 51, 52, 53) aux coûts de la réalisation de la trajectoire souhaitée (21) du premier véhicule automobile (50) et de la trajectoire planifiée adaptée (27) du deuxième véhicule automobile (51, 52, 53).

4. Procédé selon l'une quelconque des revendications précédentes, **caractérisé en ce que,** depuis les dispositif de planification de manœuvres (2) des au moins deux véhicules automobiles (50, 51, 52, 53), afin de garantir l'absence de collision entre les trajectoires planifiées (20, 23), un comportement normal (25) et au moins une manœuvre de base (26) sont effectués.

5. Procédé selon l'une quelconque des revendications précédentes, **caractérisé en ce que** les trajectoires souhaitées (21, 24) des au moins deux véhicules automobiles (50, 51, 52, 53) présentent une hiérarchisation (31), de sorte qu'un ordre de classement des trajectoires souhaitées (21, 24) puisse être créé, l'ordre de classement définissant laquelle des trajectoires souhaitées (21, 24) est mise en œuvre de préférence.

6. Procédé selon l'une quelconque des revendications précédentes, **caractérisé en ce que** les trajectoires souhaitées (21, 24) des au moins deux véhicules automobiles (50, 51, 52, 53) sont exemptes de collision.

7. Procédé selon l'une quelconque des revendications précédentes, **caractérisé en ce que** la trajectoire planifiée (20) et la trajectoire souhaitée (21) du premier véhicule automobile (50) sont transmises par le dispositif de coordination de manœuvres (3) uniquement à d'autres véhicules automobiles (51, 52, 53) dans un environnement prédéfini du premier véhicule automobile (50).

8. Procédé selon l'une quelconque des revendications précédentes, **caractérisé en ce que** pour un autre véhicule automobile (51, 52, 53), pour lequel aucune trajectoire planifiée (20, 23) et/ou souhaitée (21, 24) n'est disponible, une estimation de la trajectoire planifiée (20, 23) de l'autre véhicule automobile (50) est créée par le dispositif de coordination de manœuvres (3).

9. Procédé selon l'une quelconque des revendications précédentes, **caractérisé en ce que** les trajectoires planifiée (20) et souhaitée (21) du premier véhicule automobile (50) sont transmises par le dispositif de coordination de manœuvres (3) à intervalles réguliers et/ou en cas de modification de la trajectoire planifiée (20) et/ou souhaitée (21), au deuxième véhicule automobile (51, 52, 53) et/ou à l'autre véhicule automobile (51, 52, 53).

10. Dispositif (1) pour un premier véhicule automobile (50) destiné à la coordination décentralisée de manœuvres de conduite avec au moins un deuxième véhicule automobile (51, 52, 53), comprenant : un dispositif de coordination de manœuvres (3) pour coordonner les manœuvres de conduite avec le deuxième véhicule automobile (51, 52, 53) dans l'environnement du premier véhicule automobile (50), le dispositif de coordination de manœuvres (3) étant équipé d'une interface de véhicule à véhicule (5), afin de communiquer avec le deuxième véhicule automobile (51, 52, 53) et un dispositif de planification de manœuvres (2) pour préparer une trajectoire planifiée (20) et une trajectoire souhaitée (21) du premier véhicule automobile (50),
le dispositif de coordination de manœuvres (3) étant conçu pour transmettre la trajectoire planifiée (20) préparée et la trajectoire souhaitée (21) préparée du premier véhicule automobile (50) au moins au deuxième véhicule automobile (51, 52, 53) et pour recevoir du deuxième véhicule automobile (51, 52, 53) la trajectoire planifiée (23) et la trajectoire souhaitée (24) transmises d'un dispositif de planification de manœuvres (2) du deuxième véhicule automobile (51, 52, 53),
et le dispositif de planification de manœuvres (2) étant conçu pour, en cas de présence d'un critère d'adaptation (29), adapter la trajectoire planifiée (20) du premier véhicule automobile (50) en fonction de la trajectoire souhaitée (24) reçue du deuxième véhicule automobile (51, 52, 53) en une trajectoire planifiée adaptée (27),
**caractérisé en ce que**
les trajectoires planifiée (20) et souhaitée (21) du premier véhicule automobile (50) sont compatibles avec une trajectoire stratégique (22) du premier véhicule automobile (50),
les trajectoires planifiées (20, 23) des premier et deuxième véhicules automobiles (50, 51, 52, 53) étant exemptes de collision entre elles,
et le critère d'adaptation (29) étant que la trajectoire souhaitée (24) reçue du deuxième véhicule automobile (51, 52, 53) entre en collision avec la trajectoire planifiée (20) du premier véhicule automobile (50) et est optimisée par le biais de l'adaptation d'une fonction de coût global (30), la fonction de coût global (30) comprenant au moins des fonctions de coût des premier et deuxième véhicules automobiles.
